# DEMANDE DE BREVET EUROPEEN

(11) **EP 0 947 688 A1**
(43) Date de publication de la demande: **06.10.1999**
(21) Numéro de dépôt: 99400782.1
(22) Date de dépôt: 31.03.1999
(51) Int. Cl.: F02K 1/70

(54) **Inverseur de poussée de turboréacteur à portes formant écopes associées à un capotage externe articulé**

(30) Priorité: 02.04.1998 FR 9804091
(71) Demandeur: Hispano-Suiza Aérostructures, 76700 Gonfreville l'Orcher (FR)
(72) Inventeur: Vauchel, Guy Bernard, 76610 Le Havre (FR)

(57) **Abrégé**

Un inverseur de poussée de turboréacteur comporte des portes creuses pivotantes (3), intégrées en jet direct dans le capotage extérieur de la nacelle et constituant en jet inversé des obstacles de déviation de flux en formant écopes.

Un capotage externe (20) déplaçable recouvre en jet direct, à la fois le cadre avant (8) de structure fixe d'inverseur et la section de sortie de flux de la porte (3).

Le capotage externe (20) est monté pivotant (29) en aval du pivot (9) de la porte (3) et son bord amont se déplaçant en direction centrifuge de manière à libérer à la fois un espace au dessus du cadre avant (8) et la section de sortie du flux dévié.

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autre cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

La demande de brevet français 96.09705 décrit un exemple de réalisation, illustré par la figure 1 des dessins joints, d'un inverseur de poussée à portes formant écopes, associé à un turboréacteur à double flux.

Le dispositif d'inversion est constitué d'un ensemble mobile et d'une structure fixe. L'ensemble mobile est constitué de portes creuses 3 formant une partie mobile 2 et constituant en position jet direct, une partie du capotage extérieur de la nacelle. La structure fixe est constituée d'une partie amont 6 en amont des portes, d'une partie aval 7 en aval des portes 3 et de poutres qui relient la partie amont 6 à la partie aval 7, la structure fixe réalisant elle aussi une partie du capotage extérieur.

Les portes 3 sont montées sur une circonférence du capotage extérieur et sont montées pivotantes dans une zone aval de leurs parois latérales sur les poutres reliant la partie aval 7 à la partie amont 6 du capotage extérieur situées de part et d'autre de ces portes, ces parois latérales relient la partie extérieure ou panneau externe 4 des portes 3, qui constitue une partie de la paroi extérieure de la nacelle à la partie intérieure 5 des portes 3 qui constitue une partie de la paroi extérieure du conduit.

La partie amont 6 de structure fixe comporte un cadre avant 8 qui peut servir de support aux moyens de commande des déplacements des portes 3, constitués par exemple par des vérins. Ces moyens de commande de déplacements des portes 3 peuvent de même être situés à d'autres endroits en périphérie de la porte 3 par exemple en aval de celle-ci. Dans ce cas c'est la structure aval 7 de structure fixe qui peut supporter les organes de commande.

En position activée, les portes 3 basculent de telle façon que la partie des portes situées en amont des pivots 9 vient obstruer plus ou moins totalement le conduit tout en dégageant un passage dans le capotage extérieur de manière à permettre au flux secondaire respectivement 13 et 14 d'être canalisé dans une direction centrifuge par rapport à l'axe du conduit d'une part dans le conduit ou tuyère 10 formé par la structure de la porte 3 et entre le bord de déviation et l'externe de la structure externe 4 de la porte 3 d'autre part. La partie aval des portes vient au voisinage de l'externe du capotage extérieur. L'angle de pivotement des portes est ajusté de manière à permettre le passage du flux et de manière à réduire fortement voire à supprimer la poussée de ce flux, et à générer une contre poussée en produisant une composante du flux dévié vers l'amont.

Le type d'inverseur de poussée décrit ci-dessus, pour des raisons de débattement de la porte imposées par des contraintes de dimensionnement aérodynamique du passage du flux dans les passages dégagés par la partie amont de la porte et le positionnement de la porte en jet inversé, présente une forme proéminente 12 en aval externe du cadre 8. Une zone d'eau morte 11 plus ou moins marquée, comme rencontré habituellement sur tous les concepts à portes traditionnels dans cette zone, réduit la section de passage du flux 14 tout en minimisant l'angle d'inversion du flux 14 vers l'avant de la nacelle. En effet cette zone morte 11 forme un bouchon aérodynamique qui réduit la section efficace du puits d'inversion.
La demande de brevet français 97-06941 propose un concept de casquette mobile recouvrant le cadre avant en mode jet direct et s'escamotant par rotation autour d'un pivot lié à la structure fixe dans un sens ou de l'autre en libérant un espace et une définition aérodynamique en aval du cadre avant permettant d'améliorer les performances aérodynamiques lors de l'inversion du flux.

Le type d'inverseur de poussée décrit ci-dessus a sa longueur de section de sortie 15 de porte qui est principalement fonction de l'angle d'ouverture de la porte. En position jet inversé le détourage amont de la casquette fixe 16 ne doit pas interférer avec le flux 13 traversant la structure 10 de la porte 3 se dirigeant vers l'externe de la nacelle. Ce paramètre détermine la position le plus amont possible pouvant être tenue par le détourage. En position jet direct le détourage amont de la casquette fixe 16 étant l'interface du détourage aval du panneau externe 4 de la porte 3, la section selon cette technologie ne peut pas évoluer.

Les demandes de brevets français 96-09705 et 97-06943 apportent des solutions pour permettre l'augmentation de la longueur de la section de sortie de la porte par association de moyens articulés indépendants de la structure fixe.

Pour obtenir les performances aérodynamiques optimales dans certaines configurations d'inverseur, il peut être nécessaire à la fois de dégager la partie aval du cadre et d'augmenter la section de sortie de la porte, une première possibilité d'association des technologies est envisageable. On se retrouve alors avec un nombre important d'éléments mobiles qui augmentent sensiblement le coût et la masse et qui de plus peuvent s'interférer entre-eux.

L'emploi de plusieurs technologies en simultané peut réduire considérablement la fiabilité générale de l'inverseur.

Un des buts de l'invention est d'obtenir un accroissement des performances aérodynamiques des portes écopes, notamment lors du fonctionnement en inversion de poussée de l'inverseur, sans encourir les inconvénients des solutions connues antérieures et tout en maîtrisant des objectifs de coût, de masse et de fiabilité.
Les buts sont atteints conformément à l'invention par un inverseur de poussée de turboréacteur à portes formant écopes du type précité caractérisé en ce que,
un capotage externe déplaçable,comprenant un capot aval et un capot amont reliés par deux flancs latéraux de manière à entourer la structure externe de la porte à laquelle correspond une ouverture centrale du capotage recouvre, en jet direct, à la fois ledit cadre avant et la section de sortie de flux de la porte et est monté pivotant autour d'une articulation disposée en aval du pivot de la porte, le bord amont dudit capotage externe se déplaçant dans une direction centrifuge par rapport à l'axe géométrique de l'inverseur, de manière, lors du fonctionnement en inversion de poussée à libérer à la fois un espace au-dessus du cadre avant et la section de sortie du flux dévié, une partie du flux inversé passant par l'ouverture centrale du capotage.

D'autres caractéristiques et avantages de l'invention seront mieux compris à la lecture de la description qui va suivre des modes de réalisation de l'invention, en référence aux dessins annexés sur lesquels :

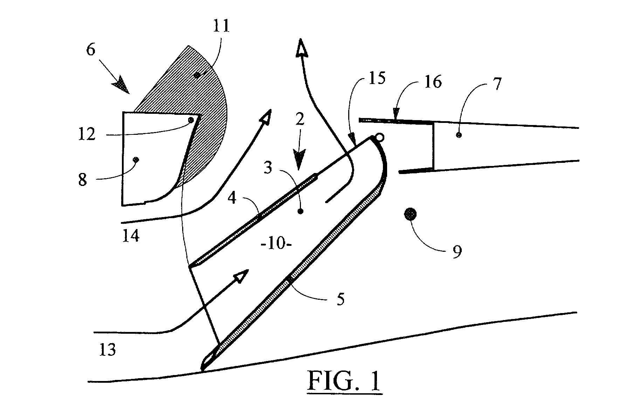

- la figure 1 représente une demi-vue schématique, en coupe longitudinale par un plan passant par l'axe de rotation d'un turboréacteur associé, d'un inverseur de poussée à portes écopes pivotantes, en position ouverte, d'un type connu et qui a fait précédemment l'objet d'une description ;
- la figure 2 représente dans une vue analogue à celle de la figure 1, en position fermée, un inverseur de poussée à portes écopes selon un mode de réalisation de l'invention ;
- la figure 3 représente le mode de réalisation décrit suivant la figure 2, en mode jet inversé ;
- la figure 4 représente un autre mode d'entraînement du capotage déplaçable en mode jet direct ;
- la figure 5 représente le mode d'entraînement du capotage déplaçable décrit suivant la figure 4 en mode jet inversé ;
- la figure 6 représente un autre mode d'entraînement du capotage déplaçable en mode jet direct ;
- la figure 7 représente le mode d'entraînement du capotage déplaçable décrit suivant la figure 6 en mode jet inversé ;
- les figures 8 & 9 représentent en perspective le concept défini suivant les figure 2 et 3 ;
- la figure 10 représente en perspective un autre mode d'arrangement de la partie avant du capotage déplaçable ;
- la figure 11 représente dans une vue analogue à celle de la figure 2 en position ouverte, un autre mode d'arrangement de la partie avant du capotage déplaçable et du cadre.

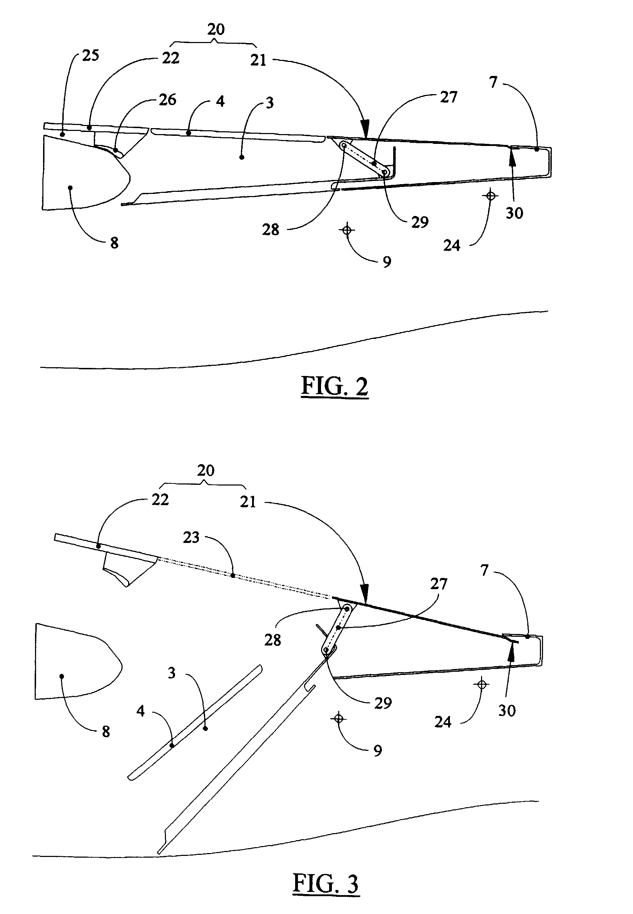

Selon un mode de réalisation de l'invention représenté sur les figures 2 et 3, une porte écope 3 est articulée sur la structure fixe autour d'un pivot 9. Un capotage 20, formé d'un capot aval 21 et d'un capot amont 22 reliés par au moins deux flancs latéraux 23, entoure la structure externe 4 de la porte 3 à laquelle correspond une ouverture centrale du capotage 20 et forme une partie des lignes externes de la nacelle. Le capotage déplaçable 20 est articulé en aval des portes 3 autour d'un pivot 24 appartenant à la structure fixe de l'inverseur. Le capot amont 22 du capotage 20 recouvre en jet direct tout ou une partie de la structure du cadre 8 créant un espace 25 de taille adaptée pour permettre éventuellement le logement d'éléments aérodynamiques définis par l'homme de métier comme une aube 26 dans l'exemple des figures. La forme interne du capot amont 22 peut avoir une définition spécifique pour optimiser l'écoulement et le guidage du flux en jet inversé.
En mode d'inversion de jet la porte 3 manoeuvre autour de son pivot 9. Préférentiellement la manoeuvre du capotage 20 est liée à celle de la porte 3 et le capotage 20 pivote simultanément autour de son pivot 24 dans une direction opposée à la rotation de la porte 3. Dans cette manoeuvre le capot amont 22 dégage la zone supérieure du cadre 8 libérant un passage et un profil aérodynamique adapté du cadre améliorant l'efficacité du jet en inversion. Une partie du flux inversé passe par l'ouverture centrale du capotage 20. L'exemple de liaison entre les deux éléments mobiles représente au moins une bielle 27 en aval du pivot 9 de la porte 3, solidaire au point 29 à la porte 3 et au point 28 à la structure interne du capot aval 21. L'embiellage représenté au centre de la porte 3 peut être placé à tout autre emplacement en symétrie par rapport au plan milieu de la porte jusqu'à être positionné à l'extérieur et en aval de la structure de porte.
Dans l'exemple des figures c'est la porte 3 qui est moteur car en position jet inversé l'alignement des trois points pivots 9, 28 et 29 se trouve dépassé interdisant de ce fait la manoeuvre de la porte 3. Bien entendu si la cinématique d'entraînement définie par l'homme de métier fournit une cinématique à trois points non alignés mais non dépassés c'est à dire si le point 29 se situe en aval d'une droite rejoignant les pivots 9 et 28, le capotage 20 peut être dans ce cas moteur.
Le capotage 20 en position déployée peut permettre avantageusement l'accès aux organes de manoeuvre contenu dans la zone du cadre avant sans ouvrir le capot entourant le carter fan du moteur en amont de l'inverseur puis les demi-structures de l'inverseur réduisant ainsi les coûts de maintenance sur avion.
L'aval 30 du capot aval 21 peut comporter une interface avec la structure aval fixe 7 mais peut réaliser une partie de la structure aval de l'inverseur.

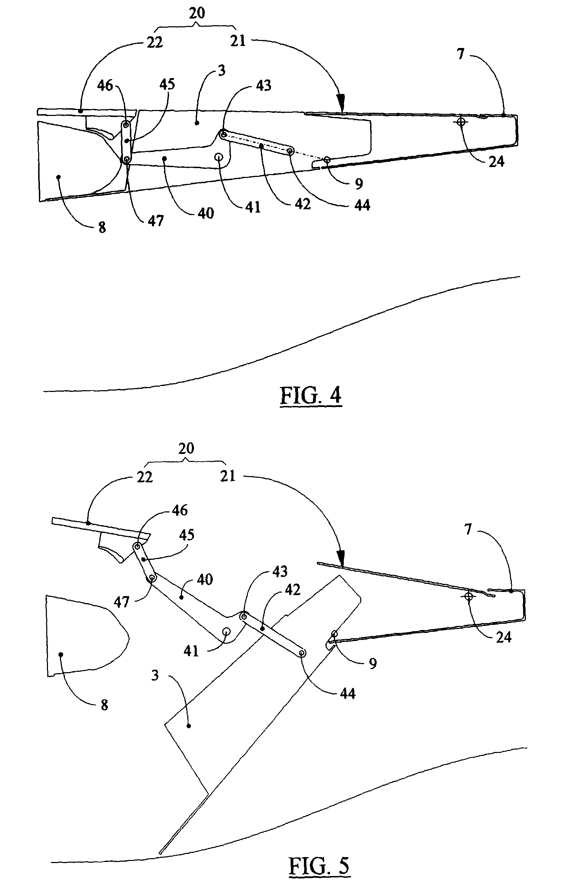

Les figures 4 et 5 montrent un exemple d'entraînement latéral positionné en amont du pivot 9 de la porte 3. Un levier 40 articulé sur la structure fixe au point 41 est entraîné par la porte 3 par une bielle 42 solidaire à la porte 3 au point 44 et solidaire au levier 40 au point 43. Une bielle 45 solidaire au levier 40 au point 47 est reliée au capot amont 22 au point 46.
L'alignement des pivots 43 et 44 de la bielle 42 avec le pivot 9 n'engendre pas de moment d'ouverture additionnel sur la porte 3 et garantit la parfaite neutralité de la structure du capotage déplaçable 20 sur l'entraînement accidentel de la porte 3 par ledit capotage déplaçable.

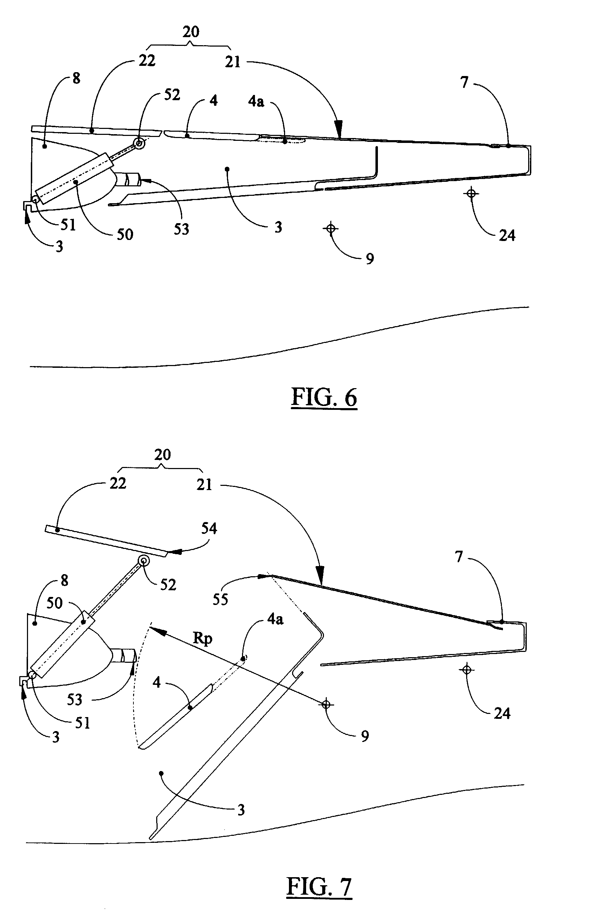

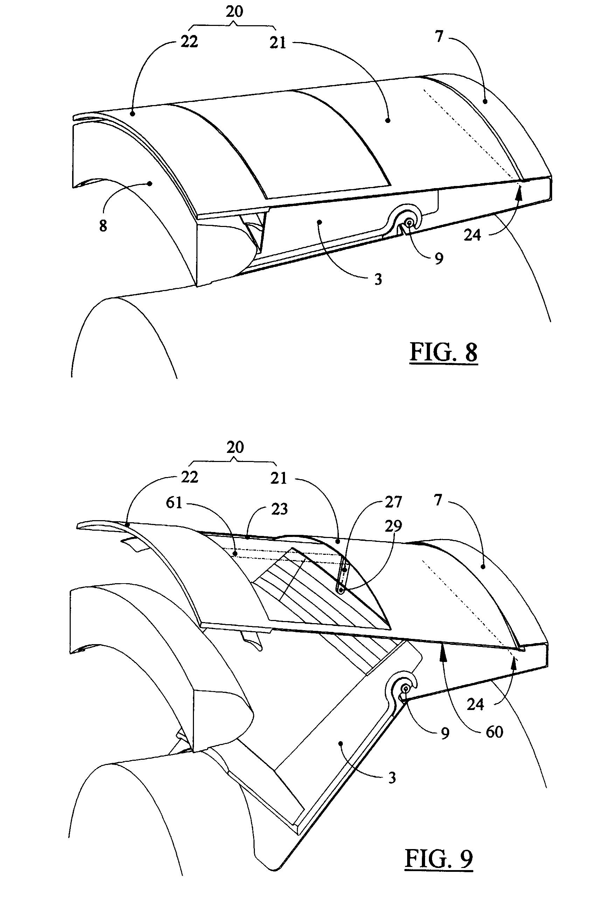

Les figures 6 et 7 représentent un exemple d'entraînement du capotage déplaçable 20. La porte 3 pouvant soit avoir son propre organe de manoeuvre indépendant comme défini par la demande de brevet 96-09705 soit être commandé par le capotage mobile comme cela a été précédemment expliqué. Au moins un vérin 50 articulé sur la structure fixe comme le cadre avant 8 au point 51 est relié au capot amont 22 au point 52. Préférentiellement l'axe du vérin passe en mode d'inversion du jet par l'interface de jonction 3 de l'inverseur avec le carter de turboréacteur pour réduire, voire annuler l'impact du moment généré sur cette interface par le flux sur le capotage 20. Il est bien entendu que l'entraînement du capotage déplaçable 20 peut se faire par au moins un vérin 50 positionné en aval de la porte fixé sur la structure fixe ou sur une partie des structures latérales fixes de part et d'autre des portes communément appelées poutres.

Indépendamment de l'entraînement du capotage déplaçable 20 défini sur ces vues, les figures 6 et 7 présentent des aménagements possibles des structures de l'inverseur.
Avantageusement le détourage amont 55 du capot aval 21 peut s'étendre vers l'amont de la nacelle jusqu'à rencontrer la définition géométrique prise par le flux sortant de la porte 3 augmentant de façon sensible la section de sortie du flux de la porte 3. Le détourage 55 peut être de définition non linéaire et/ou recouvrir en jet direct une partie 4a de la structure externe 4 de la porte 3 dans le but de piloter d'une autre manière la section de sortie du flux. La partie 4a étant masquée en jet direct, elle peut comporter des ouvertures ou des ouïes.
Avantageusement le détourage aval 54 du capot amont 22 peut être étendu vers l'aval de la nacelle permettant de réduire la distance "Rp" du pivot 9 de porte 3 à l'amont de la structure externe 4. Le rayon "Rp" est défini pour permettre la mise en place sur la structure du cadre 8 d'au moins une rangée d'aubes 53. Comme le détourage amont 55 du capot 21 l'aval 54 du capot 22 peut recouvrir en jet direct une partie de la structure amont de la structure externe 4 de la porte 3.

Les figures 8 et 9 représentent le mode de réalisation de l'invention des figures 2 et 3 en perspective. On le voit sur ces figures chaque capotage déplaçable 20 est associé à une porte 3. Les parois latérales 60 des capotages déplaçables 20 peuvent venir en interface directe les unes aux autres en mode jet direct ou en juxtaposition avec une structure fixe intermédiaire. De même l'ouverture entre les capots 21 et 22 peut comporter des éléments de jonction intermédiaire ou aérodynamiques par exemple une languette 61 de recouvrement de cavité de logement de vérin dans la porte 3.

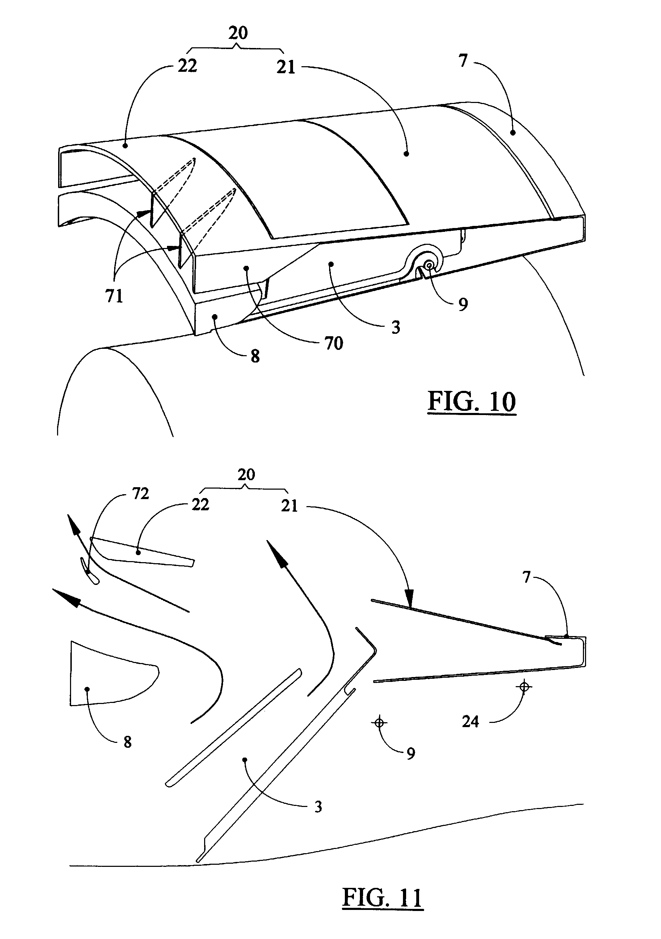

La figure 10 représente un exemple d'aménagement de la structure interne du capot amont 22. Des voiles latéraux 70 pouvant être ajourés dans le plan de l'interface latérale du capotage déplaçable 20 et/ou au moins un voile interne 71 d'orientation et de définition déterminés par l'homme de métier forment un exemple de pilotage longitudinal du flux d'inversion.
De même la figure 11 montre un exemple de positionnement d'aube 72 en amont de l'interne du capot amont 22 associé à une forme adaptée de l'interne dudit capot amont et à l'externe du cadre avant 8 pour écarter le flux de la surface externe de la nacelle et éviter ainsi tout risque de réingestion du flux par le moteur.
L'association des deux modes d'orientation du flux pouvant être réalisée sur un même ensemble d'inversion.

## Revendications

1. Inverseur de poussée de turboréacteur à double flux comportant des portes creuses pivotantes (3), constituant en position fermée, lors d'un fonctionnement en jet direct, une partie du capotage extérieur de la nacelle et après pivotement sous l'action d'un moyen de commande des déplacements, le bord amont de porte pénétrant dans le conduit de flux, les portes (3) constituant des obstacles de déviation de flux en dégageant un passage dans le capotage extérieur, lors d'un fonctionnement en inversion de poussée, au moins une partie du flux dévié empruntant le conduit interne (10) ou tuyère de la porte (3) formant écope, comportant en outre une structure fixe constituée d'une partie amont (6), située en amont des portes (3) et comportant un cadre avant (8), d'une partie aval (7) située en aval des portes (3) et de poutres longitudinales fixes qui relient les parties amont (6) et aval (7) caractérisé en ce que un capotage externe (20) déplaçable comprenant un capot aval (21) et un capot amont (22) reliés par deux flancs latéraux (23) de manière à entourer la structure externe (4) de la porte (3) à laquelle correspond une ouverture centrale du capotage (20),recouvre , en jet direct, à la fois ledit cadre avant (8) et la section de sortie de flux de la porte (3) et est monté pivotant autour d'une articulation (29) disposée en aval du pivot (9) de la porte (3), le bord amont dudit capotage externe (20) se déplaçant dans une direction centrifuge par rapport à l'axe géométrique de l'inverseur, de manière, lors du fonctionnement en inversion de poussée à libérer à la fois un espace au-dessus du cadre avant et la section de sortie du flux dévié, une partie du flux inversé passant par l'ouverture centrale du capotage (20).

2. Inverseur de poussée de turboréacteur à double flux selon la revendication 1 caractérisé en ce que un capotage externe déplaçable est associé à chaque porte (3) de l'inverseur.

3. Inverseur de poussée de turboréacteur à double flux selon l'une des revendications 1 ou 2 caractérisé en ce que la porte (3) et le capotage externe (20) sont reliés par un système de bielles (27 ; 40, 42, 45) assurant un entraînement simultané.

4. Inverseur de poussée de turboréacteur à double flux selon l'une quelconque des revendications 1 à 3 caractérisé en ce que le déplacement du capotage externe (20) est commandé par au moins un vérin (50) articulé sur la structure fixe d'inverseur.

5. Inverseur de poussée de turboréacteur à double flux selon l'une quelconque des revendications 1 à 4 caractérisé en ce que au moins un élément aérodynamique ou aube (26 ; 72) est disposé entre le cadre avant (8) de structure fixe et la face interne de la partie amont (22) du capotage externe (20).

6. Inverseur de poussée de turboréacteur à double flux selon l'une quelconque des revendications 1 à 5 caractérisé en ce que au moins une rangée d'aubes (53) est fixée du côté aval sur le cadre avant (8) de structure fixe et les positions du bord aval (54) de la partie amont (22) du capotage externe (20) et du bord amont du panneau extérieur (4) de la porte (3) sont déterminées pour permettre cette installation.

7. Inverseur de poussée de turboréacteur à double flux selon l'une quelconque des revendications 1 à 6 caractérisé en ce que le bord amont (55) de la partie aval (21) du capotage externe (20) présente une forme aménagée et recouvre en jet direct une partie (4a) du panneau extérieur (4) de la porte (3), de manière à piloter la section de sortie du flux lors du fonctionnement en inversion de poussée.

8. Inverseur de poussée de turboréacteur à double flux selon l'une quelconque des revendications 1 à 7 caractérisé en ce que la partie amont (22) du capotage externe (20) porte du côté interne des voiles latéraux (70) et au moins un voile intermédiaire (71) orienté de manière à assurer le pilotage longitudinal du flux d'inversion.
